# EUROPEAN PATENT APPLICATION

(11) **EP 2 063 644 A2**
(43) Date of publication of application: **27.05.2009**
(21) Application number: 08253486.8
(22) Date of filing: 27.10.2008
(51) Int. Cl.: H04N 7/26, H04N 7/30, H04N 7/34, H04N 7/50

(54) **Image encoding device and encoding method, and image decoding device and decoding method**

(30) Priority: 30.10.2007 JP 2007281605
(71) Applicant: Hitachi Ltd., Chiyoda-ku Tokyo (JP)
(72) Inventor: Takahashi, Masashi, Tokyo 100-8220 (JP); Murakami, Tomokazu, Tokyo 100-8220 (JP)
(74) Representative: Calderbank, Thomas Roger

(57) **Abstract**

In an image encoding/decoding device of the present invention, the prediction direction in a target block, i.e., a block which becomes the target of the intra-frame prediction processing, is estimated by taking advantage of pre-encoded blocks which are adjacent to the target block. First, as edge information on decoded images on the adjacent blocks, intensities and angles of the edges are calculated. Next, of the degrees of likelihood calculated with respect to each prediction direction by taking advantage of this edge information and, e.g., a neural network (702), the prediction direction whose degree of likelihood is the highest is employed as the prediction direction in the target block. Also, a variable-length code table is dynamically created based on the estimated result, which allows a significant reduction in the prediction-direction representing code amount.

## Description

The present invention relates to an image encoding technology for encoding an image such as a moving picture or still-frame picture, and an image decoding technology for decoding the image encoded.

As techniques for recording and transmitting large-capacity moving-picture information in such a manner that the moving-picture information is converted into digital data, the encoding schemes such as MPEG (: Moving Picture Experts Group) schemes had been formulated, and have become internationally-standardized encoding schemes as MPEG-1 standard, MPEG-2 standard, MPEG-4 standard, and H.264/AVC (: Advanced Video Coding) standard. These schemes are employed in such utilizations as digital satellite broadcasting, DVDs, mobile telephones, and digital cameras. At present, these schemes are becoming more and more expanded in their utilization range, and are becoming increasingly quite familiar to the general public.

In these standards, an encoding target image is predicted in a block unit by taking advantage of image information whose encoding processing is completed. Then, a prediction difference between the original image and the encoding target image predicted in this way is encoded. By doing this prediction-difference encoding, redundancy which the moving picture possesses is eliminated thereby to reduce the resultant code amount. In H.264/AVC in particular, the intra-frame prediction encoding scheme is employed which takes advantage of peripheral pixels on the periphery of the encoding target block. The employment of this intra-frame prediction encoding scheme has allowed the implementation of a dramatic enhancement in the compression ratio.

In the above-described intra-frame prediction encoding scheme according to H.264/AVC, one reference pixel is selected from among pixels included in a pre-encoded block. Then, all of the pixels existing along a certain specific prediction direction are predicted using the pixel value of this reference pixel. At this time, the prediction accuracy is enhanced by making the specific prediction direction, which is suitable for the image, selectable from among a plurality of prediction directions defined in advance. In this case, however, a code for representing the prediction direction is required to be added for each block which becomes the prediction unit. Accordingly, there has existed a problem that the code amount increases by the amount equivalent to this addition of the code.

In, e.g., Jamil-ur-Rehman and Zhang Ye, "Efficient Techniques for Sign alling Intra Prediction Modes of H.264/Mpeg-4 Part 10", Proc. ICICIC2006, August, 2006, an attempt to solve this problem has been made. In this technique, the code amount is decreased by shortening the prediction-direction representing code in each of blocks at the frame edges where the prediction-direction number available is comparatively small. This technique, however, can be applied only to the blocks at the frame edges. Consequently, this technique brings about only a small effect of enhancing the compression efficiency.

Also, in JP-A-2007-116351 (paragraphs 0009, 0020, 0027), the proposal has been made concerning an image prediction decoding method which is designed to implement an efficient decoding processing by reducing mode information about prediction methods. In this image prediction decoding method, the following prediction method is further derived: Namely, based on pre-processed data corresponding to an adjacent region adjacent to an encoding target region and including pre-reproduced pixel signals, this prediction method generates an intra-frame prediction signal having a high pixel-signal correlation with the adjacent region from among a plurality of predetermined prediction methods. The mode information about the prediction method (i.e., direction) is reconstructed using the pre-processed data.

Moreover, in JP-A-2004-129260 (paragraph 0026), the disclosure has been made concerning a method for performing space prediction encoding and decoding of the color-phase component of an intra image. Namely, if the prediction mode is not included in the bit stream, variation amounts in vertical and horizontal directions of the pixel values with respect to the present block are calculated by taking advantage of reconstructed reference blocks on the upper side and side-surface sides of the present block. Then, the prediction method is determined based on these variation amounts.

In view of the above-described situation, in order to enhance the compression efficiency, there exists a point which should be solved for accomplishing the point of decreasing the code amount for representing a prediction direction with respect to every block within the frame.

In the present invention, the compression efficiency may be enhanced by decreasing the prediction-direction representing code amount.

In the present invention, the prediction direction in an encoding target block, i.e., a block which becomes the target of the intra-frame prediction encoding processing, is estimated by taking advantage of pre-encoded blocks which are adjacent to the encoding target block. For example, a Sobel filter is applied to each of decoded images in four pre-encoded blocks which are adjacent to the left side, upper-left side, upper side, and upper-right side of the encoding target block, thereby calculating edge information which includes intensities and angles of the edges. Next, the degree of likelihood of each prediction direction is calculated, using parameters of these eight intensities and angles obtained by this calculation. Finally, the prediction direction whose degree of likelihood is the highest is employed as the prediction direction in the encoding target block. The employment of the prediction direction like this makes it unnecessary to add the prediction-direction representing code to the bit stream.

The present invention is also effective to direction-independent intra-frame prediction schemes such as, e.g., the DC prediction in H.264/AVC. Accordingly, its application to these schemes makes it possible to expect a significant reduction in the code amount. Also, a variable-length code table is dynamically created based on the above-described estimated result. The creation of this table also allows implementation of a significant reduction in the prediction-direction representing code amount. As a result, it becomes possible to expect an enhancement in the compression efficiency. Incidentally, taking advantage of, e.g., a neural network is effective to the above-described likelihood-degree calculation in each prediction direction.

According to the present invention, it becomes possible to provide an image encoding technology and decoding technology for offering a high-picture-quality image with a small code amount.

In the drawings

These and other features, objects and advantages of the present invention will become more apparent from the following description when taken in conjunction with the accompanying drawings wherein:
Fig. 1 is a block diagram for illustrating an embodiment of the image encoding device according to the present invention;
Fig. 2 is a block diagram for illustrating an embodiment of the image decoding device according to the present invention;
Fig. 3 is a conceptual explanatory diagram for explaining the intra-frame prediction encoding processing used in H.264/AVC;
Fig. 4 is a conceptual explanatory diagram for explaining the intra-frame prediction decoding processing used in H.264/AVC;
Figs. 5A and 5B are conceptual explanatory diagrams for explaining the encoding processing for the prediction mode used in H.264/AVC;
Figs. 6A and 6B are conceptual explanatory diagrams for explaining an embodiment of the encoding processing for the prediction mode used in the present embodiment;
Fig. 7 is a conceptual explanatory diagram for explaining an embodiment regarding the likelihood-degree calculation of the prediction mode;
Fig. 8 is a flowchart in the image encoding device used in the present embodiment;
Fig. 9 is a flowchart in the image decoding device used in the present embodiment;
Figs. 10A to 10D are conceptual diagrams for explaining an embodiment of the encoding processing of the prediction mode used in the present embodiment;
Fig. 11 is a conceptual diagram for explaining an embodiment regarding the likelihood-degree calculation of the prediction mode;
Fig. 12 is a table for illustrating an example of the variable-length code table;
Fig. 13 is a table for illustrating another example of the variable-length code table;
Figs. 14A and 14B are diagrams for illustrating examples of filters used in the edge detection, and;
Fig. 15 is a conceptual diagram for illustrating an example of the calculation method for the edge information.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications a fall within the ambit of the appended claims., as interpreted by the description and drawings. Hereinafter, referring to the drawings, the explanation will be given below concerning embodiments of the present invention.

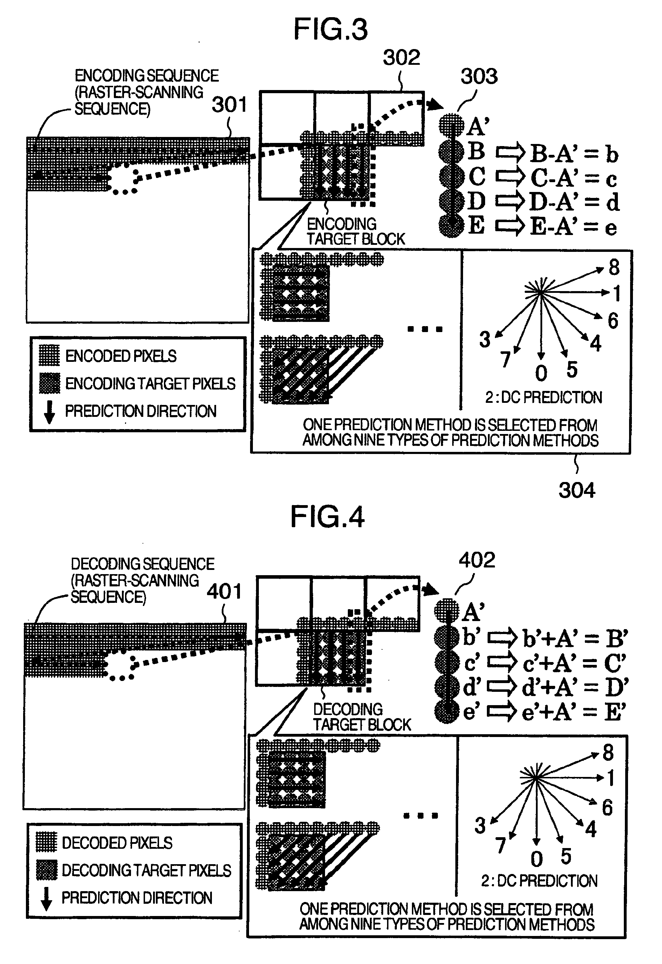

Fig. 3 is a conceptual diagram for explaining the intra-frame prediction encoding processing according to H.264/AVC. In H.264/AVC, the encoding is executed with respect to an encoding target image in accordance with the sequence of the raster scanning (301). Then, the prediction is performed using decoded images in four pre-encoded blocks which are adjacent to the left side, upper-left side, upper side, and upper-right side of the encoding target block.

In particular, for the purpose of the prediction, thirteen decoded pixels included in these four blocks are taken advantage of (302). Of pixels included in the encoding target block, all of the pixels existing on one and the same straight line whose inclination is represented by a prediction-direction vector are predicted from one and the same reference pixel. Namely, the thirteen pixels are the pixels which, of the pixels included in the four blocks, are arranged in a manner of being adjacent to the encoding target block. Concretely, these thirteen pixels are as follows: In the left side block, the four pixels on the right-most longitudinal line; in the upper-left side block, the one pixel at the lower-right corner; and in the upper side and upper-right side blocks, the four pixels arranged transversely on the lower-most side each. Concerning the prediction, if, as indicated by, e.g., (303), the direction of the prediction-direction vector is a downward direction, all of the longitudinally-arranged four pixels B, C, D, and E in the encoding target block are subjected to the prediction encoding by making reference to one and the same reference pixel (i.e., the value A' obtained by decoding the pixel positioned directly above the pixel B) which exists on the prediction-direction vector in the upper side block (here, the prediction for the pixels B, C, D, and E is made by being assumed to be the same value as the value A', namely, each of the predicted pixel values for B, C, D, and E is equal to the value A'). Moreover, with respect to the pixels B, C, D, and E, differences (i.e., prediction differences) b, c, d, and e between the pixels B, C, D, and E and the predicted pixel value A' are calculated.

In H.264/AVC, not being limited to the above-described downward-direction prediction-direction vector, an optimum prediction-direction vector can be selected in the block unit from among eight types of prediction-direction candidates such as longitudinal, transverse, and oblique prediction directions (i.e., the directions indicated by the arrows of 0, 1, and 3 to 8 in Fig. 3). In H.264/AVC, however, "DC prediction" can also be taken advantage of (304) in addition to the above-described prediction made along the specific prediction direction. In the DC prediction, all of the pixels included in the encoding target block are predicted using an average value of the reference pixels. The prediction direction 2 is allocated to the DC prediction. Of these prediction methods (which, hereinafter, will be referred to as "prediction modes") that are represented in a manner of being distinguished by the above-described nine types of numbers (i.e., the eight directions + the DC prediction), information for indicating which of the prediction modes has been selected is encoded along with the prediction differences b, c, d, and e.

Fig. 4 is a conceptual diagram for explaining the intra-frame prediction decoding processing according to H.264/AVC. In the decoding processing as well, as is the case with the encoding processing, the decoding is executed in accordance with the sequence of the raster scanning (401). Then, processing steps which are inverse to the encoding processing are executed, using a pre-decoded reference pixel and prediction differences. Namely, in a decoding target block, in accordance with the prediction mode selected at the time of the encoding processing and along the prediction direction corresponding thereto, the prediction differences (decoded values) are added to the reference pixel, thereby acquiring the decoded image. In, e.g., (402), the following process is indicated: A summation is calculated between prediction differences b', c', d', and e' in the decoding target block (each of which results from decoding each of the prediction differences b, c, d, and e illustrated in Fig. 3, and each of which contains a quantization error) and the reference pixels A'all of which have been pre-decoded, thereby acquiring decoded pixels B', C', D', and E' (each of which is the decoded pixel corresponding to each of B, C, D, and E in Fig. 3).

As having been described so far, in the intra-frame prediction encoding processing according to H.264/AVC, the single-direction-based prediction encoding method is employed where one reference pixel is specified, and where all of the pixels existing along a specific prediction direction are predicted using the pixel value of this reference pixel. In this case, however, the information for indicating in which direction the prediction will be made has been required to be added for each encoding target block which becomes the unit of the prediction processing.

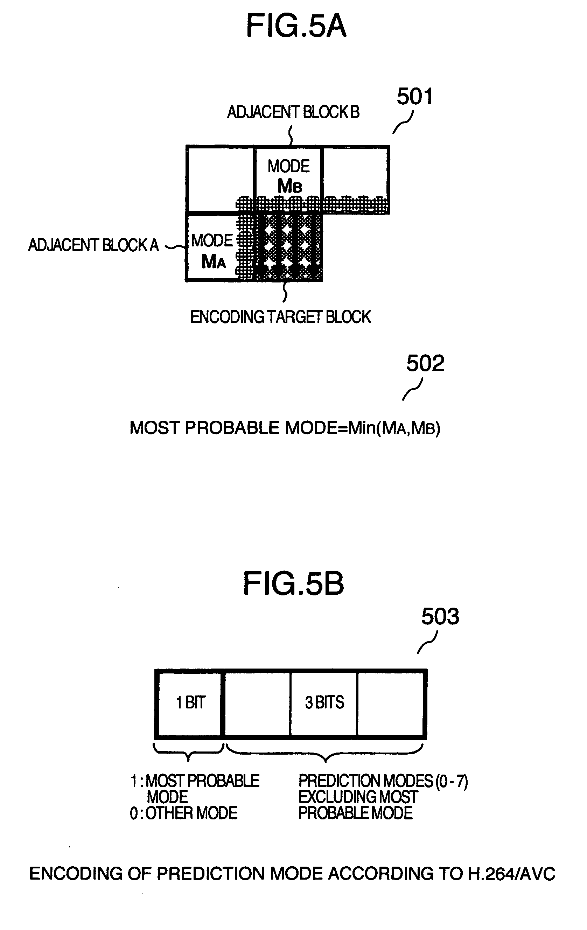

Figs. 5A and 5B illustrate the encoding method for the prediction mode in the intra-frame prediction scheme according to H.264/AVC. In H.264/AVC, attention is focused on the fact that the prediction mode in the encoding target block is highly correlated with the prediction modes in the pre-encoded blocks adjacent thereto. Accordingly, the prediction mode in the encoding target block is predicted from the prediction modes in the pre-encoded adjacent blocks. Namely, as is indicated by (501), reference is made to the prediction mode M_{A} in the adjacent block A which is adjacent to the left side of the encoding target block, and the prediction mode M_{B} in the adjacent block B which is adjacent to the upper side of the encoding target block. Then, the prediction mode whose number (i.e., one of the nine types of numbers illustrated in Fig. 3 (Fig. 4)) is smaller of these two prediction modes M_{A} and M_{B} is employed as the prediction value (most probable mode) of the prediction mode in the encoding target block (502).

The reference numeral (503) in Fig. 5B illustrates details of the bit configuration which represents the prediction method. In H.264/AVC, if the prediction mode in the encoding target block is the same as the most probable mode, the use of a flag (1 bit) for indicating whether or not the prediction mode is the same as the most probable mode encodes information for indicating that the prediction mode is the same as the most probable mode (i.e., code of "1" as the flag). Meanwhile, if the prediction mode in the encoding target block is different from the most probable mode, the use of the flag encodes information for indicating that the prediction mode is different from the most probable mode (i.e., code of "0" as the flag). After that, the actual prediction mode (of the nine-way prediction modes, one of the eight-way prediction modes excluding the most probable mode) is encoded with 3 bits. In this case, the representation of the prediction mode requires the use of a large amount of code. For example, when the intra-frame prediction is made in the 4-pixel x 4-pixel-size block unit, a 64-bit code occurs at the maximum per macro block.

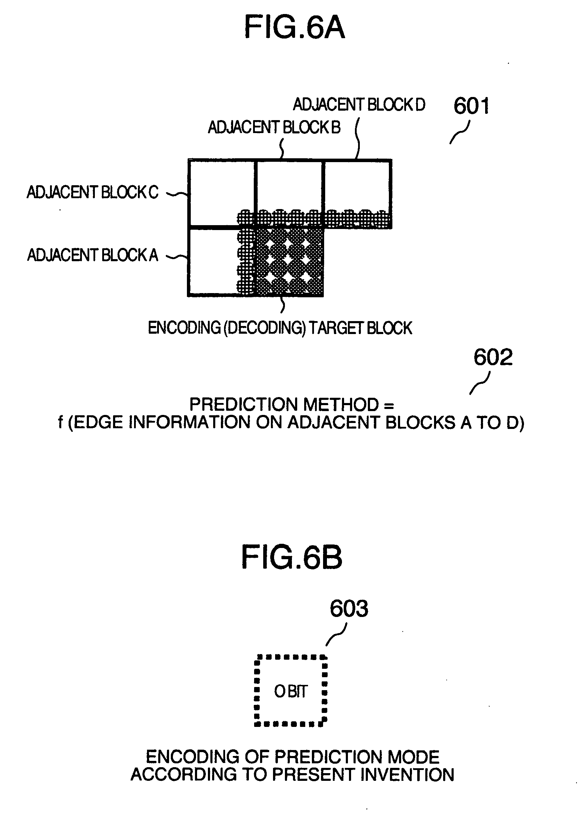

Figs. 6A and 6B are conceptual diagrams for illustrating an embodiment of the encoding processing for the prediction mode according to the present invention. Here, as is indicated by (601), the prediction mode in the encoding (decoding) target block is estimated by taking advantage of decoded images in the pre-encoded adjacent blocks A, B, C, and D which are adjacent to the left side, upper-left side, upper side, and upper-right side of the encoding (decoding) target block. The prediction mode in the target block is identified by taking advantage of a function f for inputting edge information on the adjacent blocks A to D, and outputting the prediction mode in the target block (602). Taking advantage of this function f makes it unnecessary to encode the prediction mode. As a result, the bit amount needed for representing the prediction mode becomes equal to zero (603).

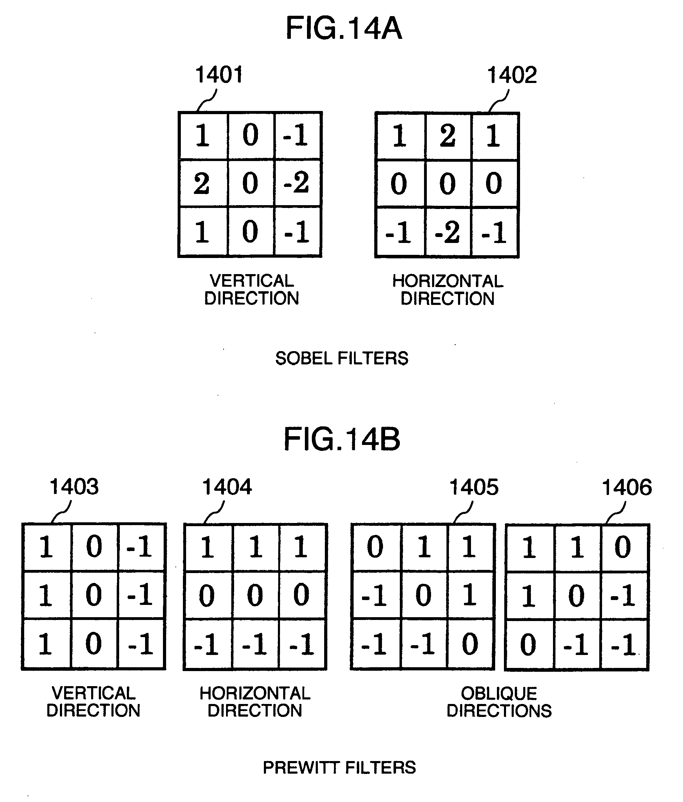

Although the type of a detection method for detecting the above-described edge information is not particularly specified, taking advantage of, e.g., a Sobel filter illustrated in Fig. 14A is quite effective. When taking advantage of the Sobel filter, two types of Sobel filters, i.e., a vertical-direction-use Sobel filter (1401) and a horizontal-direction-use Sobel filter (1402), are used, thereby detecting the edges in the respective directions. Also, the use of a Prewitt filter is allowable. In this case, in addition to a vertical-direction-use filter (1403) and a horizontal-direction-use filter (1404), oblique-direction-use filters (1405) and (1406) are prepared. Also, what is conceivable as a usage example of a simpler filter is the use of a MIN-MAX filter. In the MIN-MAX filter, a rectangular filter in a specific size is prepared at first, then calculating a difference between the maximum value and the minimum value of the concentration value therein.

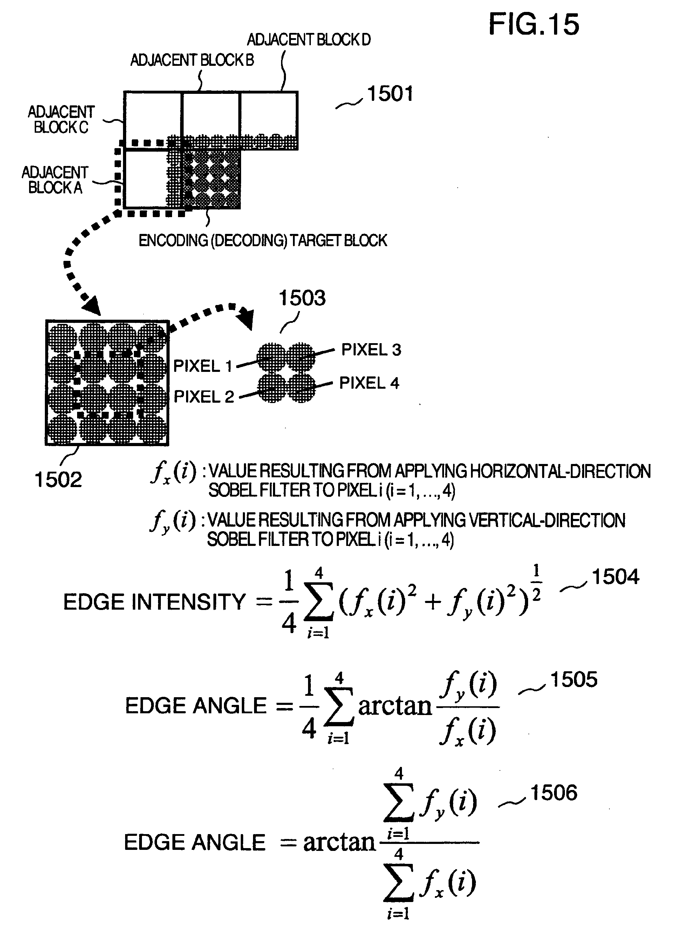

Fig. 15 illustrates an example of the calculation method for calculating the edge information including edge intensities and edge angles in the case of taking advantage of the Sobel filters (1401) and (1402). Here, out of the decoded images in the pre-encoded adjacent blocks A, B, C, and D which are adjacent to the left side, upper-left side, upper side, and upper-right side of the encoding (decoding) target block (1501), four pixels (i.e., pixel 1 to pixel 4) positioned at the center of each of the decoded images are extracted (1503). Then, the vertical-direction-use filter (1401) and the horizontal-direction-use filter (1402) are applied to these four pixels. Assuming that, at this time, values resulting from applying the horizontal-direction-use filter (1402) and the vertical-direction-use filter (1401) to the pixel i (i = 1, ..., 4) are fₓ (i) and f_{y} (i) receptively, the edge intensity can be calculated as is given by, e.g., (1504), and the edge angles can be calculated as are given by, e.g., (1505) and (1506).

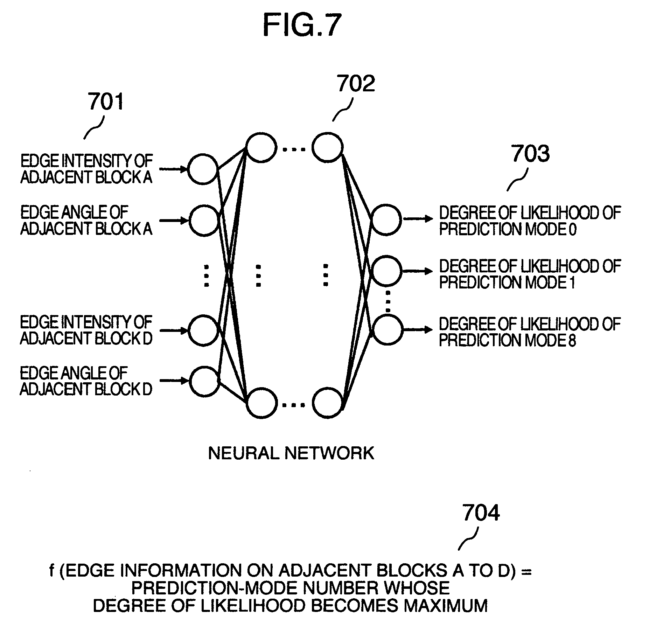

As the function f for outputting the prediction mode in the target block, whatever function is all right. For example, taking advantage of the mechanical learning function of a neural network permits successful implementation of this function f. Fig. 7 illustrates an example of the case where the function f is implemented taking advantage of the neural network. The neural network refers to a network where a plurality of threshold-value logic units are hierarchically deployed from an input layer to an output layer. In the feed-forward-type network, a connection between the units exists only between layers adjacent to each other, and the connection is a one-direction connection directed from the input layer to the output layer. A weight of the connection is allocated to between the connected units. Moreover, an input into a unit deployed in a higher-order hierarchy becomes equal to a summation of the products of values outputted by a group of units deployed in a lower-order hierarchy and the weights of the connections between the units. When the learning is performed, these weights are adjusted so that a desirable result will be obtained in the output layer. Here, the learning in the neural network (702) is performed in advance so that, when the edge intensities and edge angles of the adjacent blocks A to D are normalized and inputted into the neural network (701), the degree of likelihood of the prediction mode n (n = 0, 1, ..., 8) will be calculated and outputted (703). At this time, a function which will return the prediction-mode number in which the highest degree of likelihood is outputted is set as the above-described function f (704). This setting allows implementation of the encoding and decoding processings based on the method illustrated in Figs. 6A and 6B. Although the learning method to be used for the above-described learning is not particularly specified, taking advantage of, e.g., the BP (: Back Propagation) method permits accomplishment of an outstanding effect. Concerning the BP method, the detailed explanation has been given in, e.g., Chapter 3 of the following document:

Document: Kenichiro Ishii, Syukou Ueda, Eisaku Maeda, Hiroshi Murase: "Easy-To-Understand Pattern Recognition", Ohm Corp., 1998.

The candidates for the above-described function f are widely conceivable, ranging from a simple polynomial where the edge intensities and angles are employed as the variable to a function where the mechanical learning techniques are used such as kernel method, SVM (: Support Vector Machine), k-nearest neighbor algorithm, linear determinant analysis, Baysian network, Hidden Markov Model, and decision-tree learning. Also, a plurality of identification devices may be combined by a method of using boosting or the like. With which of the models the function f is to be implemented, or what type of input/output the function f is to perform may be determined by a standard in advance, or it is all right to permit the information on the function f to be stored into the stream. Also, in the above-described embodiment, the edge intensities and angles of the central four pixels in the adjacent blocks are used as the variables. However, whatever information is usable as long as it is information on the peripheral blocks such as pixel-value average, variance, standard deviation, encoding method, and prediction mode of the peripheral blocks. Otherwise, it is all right to add image parameters on the encoding condition such as QP (: Quantization Parameter) and frame resolution.

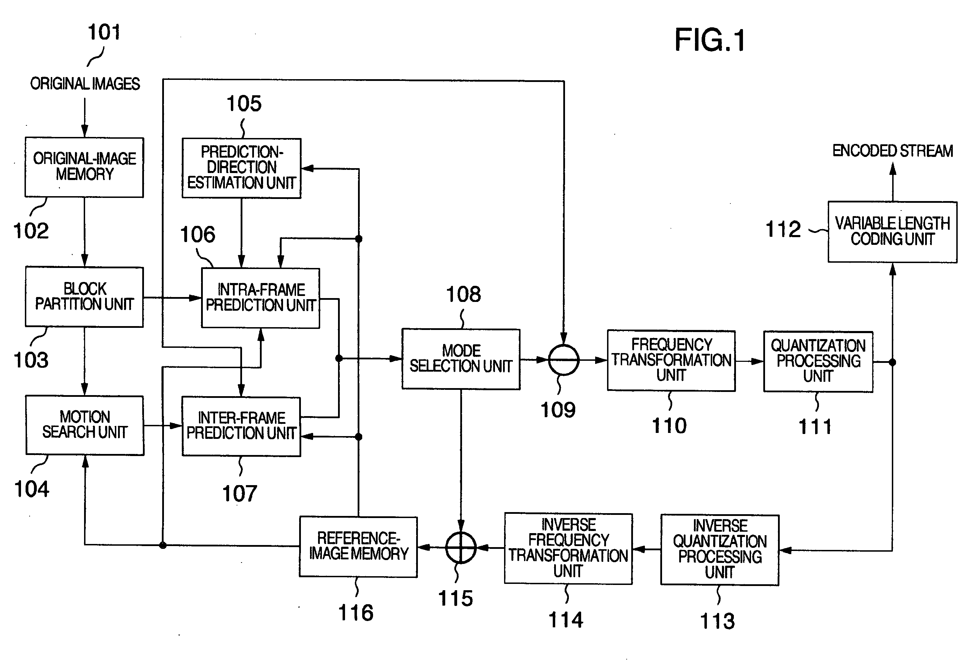

Fig. 1 is a block diagram for illustrating an embodiment of the moving-picture encoding device according to the present invention. The moving-picture encoding device includes an original-image memory (102) for storing original images (101) inputted, a block partition unit (103) for partitioning each of the inputted original images (101) into small regions, a motion search unit (104) for detecting a motion in the block unit, a prediction-mode estimation unit (105) for estimating a prediction direction in the intra-frame prediction, an intra-frame prediction unit (106) for making the intra-frame prediction in the block unit, an inter-frame prediction unit (107) for making an inter-frame prediction in the block unit and based on the motion amount detected by the motion search unit (104), a mode selection unit (108) for determining a prediction encoding scheme (i.e., prediction method and block size) which matches property of the image, a subtraction unit (109) for generating prediction differences, a frequency transformation unit (110) and a quantization processing unit (111) for performing an encoding with respect to the prediction differences, a variable length coding unit (112) for performing a variable length.coding in correspondence with occurrence probability of a code, an inverse quantization processing unit (113) and an inverse frequency transformation unit (114) for decoding the prediction differences encoded once temporarily, an addition unit (115) for generating a decoded image by using the prediction differences decoded, and a reference-image memory (116) for storing the decoded image to take advantage of the decoded image in the prediction later.

The original-image memory (102) stores a piece of image from among the original images (101) as an encoding target image. The block partition unit (103) partitions this encoding target image into small blocks, then transferring these small blocks to the motion search unit (104), the intra-frame prediction unit (106), and the inter-frame prediction unit (107). The motion search unit (104) calculates a motion amount in the blocks by using the pre-decoded image stored in the reference-image memory (116), then transferring the corresponding motion vector to the inter-frame prediction unit (107). The prediction-mode estimation unit (105) extracts, from the reference-image memory (116), decoded images in the pre-encoded blocks positioned on the periphery of the target block, then performing the edge detection to identify the prediction direction in the target block, and transferring the identified prediction direction to the intra-frame prediction unit (106). The intra-frame prediction unit (106) and the inter-frame prediction unit (107) execute the intra-frame prediction processing and the inter-frame prediction processing in the block units in several sizes. The mode selection unit (108) selects an optimum prediction method which is either the intra-frame prediction method or the inter-frame prediction method.

Subsequently, the subtraction unit (109) generates the prediction differences based on the optimum prediction encoding scheme, then transferring the generated prediction differences to the frequency transformation unit (110). The frequency transformation unit (110) and the quantization processing unit (111) apply a frequency transformation such as the DCT (: Discrete Cosine Transformation) and a quantization processing respectively to the transferred prediction differences in the block unit in a specified size, then transferring the resultant after-quantized frequency transformation coefficients to the variable length coding unit (112) and the inverse quantization processing unit (113). Moreover, based on the occurrence probability of the code, the variable length coding unit (112) performs the variable length coding with respect to the prediction-difference information represented by the after-quantized frequency transformation coefficients, thereby generating an encoded stream. Here, this variable length coding is performed along with the variable length coding of the information needed for the prediction decoding, such as the prediction direction in the intra-frame prediction encoding and the motion vector in the inter-frame prediction encoding. Also, the inverse quantization processing unit (113) and the inverse frequency transformation unit (114) apply an inverse quantization processing and an inverse frequency transformation such as the IDCT (: Inverse DCT) respectively to the after-quantized frequency transformation coefficients, thereby acquiring the prediction differences, and then transferring the acquired prediction differences to the addition unit (115). Subsequently, the addition unit (115) generates the decoded image, which is then stored into the reference-image memory (116). Incidentally, in the prediction-mode estimation unit (105), other than the specific prediction direction, direction-independent intra-frame prediction schemes such as, e.g., the DC prediction in H.264/AVC may also be employed as the target of the estimation.

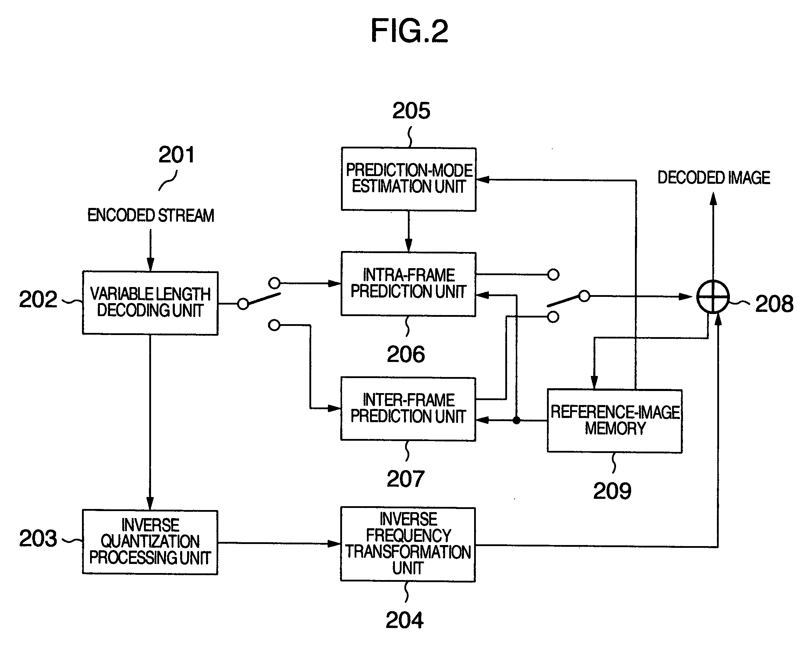

Fig. 2 is a block diagram for illustrating an embodiment of the moving-picture decoding device according to the present invention. The moving-picture decoding device includes, e.g., a variable-length decoding unit (202) for performing an inverse processing step to the variable length coding with respect to the encoded stream (201) which is generated by the moving-picture encoding device illustrated in Fig. 1, an inverse quantization processing unit (203) and an inverse frequency transformation unit (204) for decoding the prediction differences, a prediction-mode estimation unit (205) for estimating a prediction direction in the intra-frame prediction, an intra-frame prediction unit (206) for making the intra-frame prediction, an inter-frame prediction unit (207) for making an inter-frame prediction, an addition unit (208) for acquiring a decoded image, and a reference-image memory (209) for storing the decoded image temporarily.

The variable-length decoding unit (202) performs the variable-length decoding with respect to the encoded stream (201), thereby acquiring the frequency transformation coefficient components of the prediction differences, and the information needed for the prediction processing such as the block size and the motion vector. The former information, i.e., the prediction-difference information is transferred to the inverse quantization processing unit (203). The latter information, i.e., the information needed for the prediction processing is transferred to either the intra-frame prediction unit (206) or the inter-frame prediction unit (207), depending on the prediction scheme. Subsequently, the inverse quantization processing unit (203) and the inverse frequency transformation unit (204) apply the inverse quantization processing and the inverse frequency transformation respectively to the prediction-difference information, thereby performing the decoding. Also, the prediction-mode estimation unit (205) extracts, from the reference-image memory (209), the decoded images in the pre-encoded blocks positioned on the periphery of the target block, then performing the edge detection to identify the prediction direction in the target block, and transferring the identified prediction direction to the intra-frame prediction unit (206). Subsequently, the intra-frame prediction unit (206) or the inter-frame prediction unit (207) executes the prediction processing by making reference to the reference-image memory (209) on the basis of the information transferred from the variable-length decoding unit (202). Moreover, the addition unit (208) generates the decoded image, which is then stored into the reference-image memory (209). In this way, similarly to the moving-picture encoding device, the moving-picture decoding device itself includes the prediction-mode estimation unit (205) and the prediction units (206) and (207) subsequent thereto. As a result, as is the case with the moving-picture encoding device, the prediction processing by which the prediction direction in the target block is identified is executed from the signal decoded from the encoded stream. Consequently, there exists no necessity for adding a prediction-mode representing code to the encoded stream. This feature allows implementation of a reduction in the code amount at the time of encoding and decoding the image.

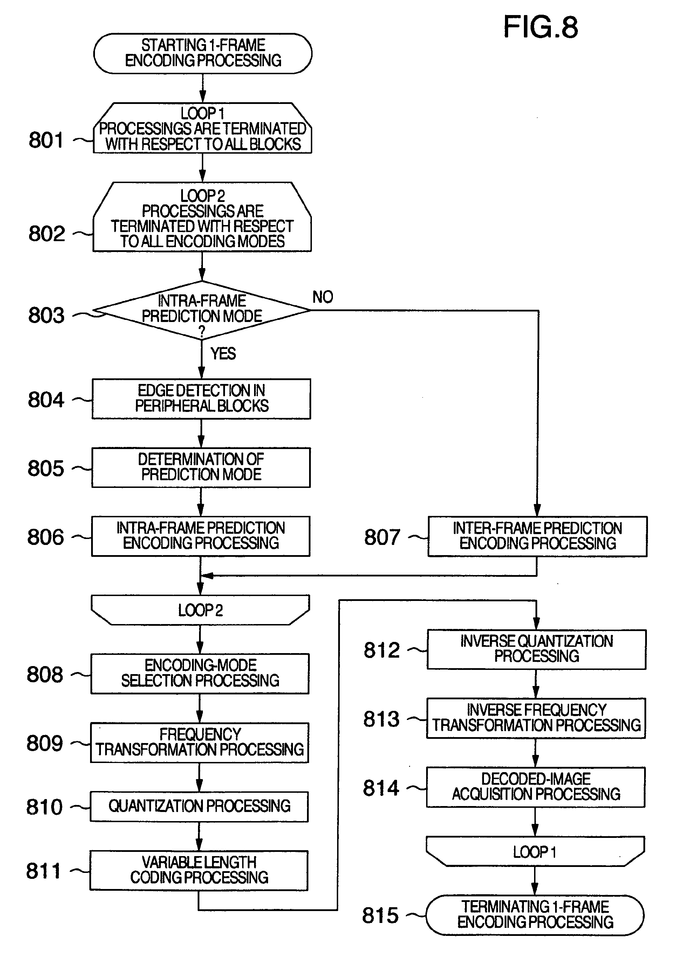

Fig. 8 is a flowchart for illustrating 1-frame encoding processing steps in the embodiment of the moving-picture encoding device illustrated in Fig. 1. First, with respect to all the blocks existing within 1 frame which becomes the encoding target (801), the processing in a loop 1, where each processing up to a processing (814) described hereinafter is repeated, is performed. Within the processing in the loop 1, the processing in a loop 2, where each processing from a processing (803) to a processing (806 or 807) is repeated with respect to all the coding modes, is further performed. Namely, the prediction differences are calculated with respect to the encoding target block by performing the prediction encoding processing with respect to all the coding modes (i.e., combinations of the prediction methods and the block sizes) once temporarily. Then, of all the coding modes, the coding mode which results in the highest encoding efficiency is selected. As the above-described prediction encoding processing method, the intra-frame prediction encoding processing (806) and the inter-frame prediction encoding processing (807) are executed, then selecting an optimum prediction processing method from these processings. This selection allows implementation of a high-efficiency encoding in correspondence with the property of the image. Here, in the case of the intra-frame prediction mode (803), when performing the intra-frame prediction encoding processing (806), the edge included in the pre-encoded blocks positioned on the periphery of the target block is detected using the Sobel filter or the like (804). Moreover, the prediction direction in the target block is identified by taking advantage of, e.g., the function F illustrated in (704) (805). When the coding mode which results in the highest encoding efficiency is selected from among the large number of coding modes (808), taking advantage of, e.g., the RD-Optimization scheme allows implementation of the high-efficiency encoding. In the RD-Optimization scheme, the optimum coding mode is determined from the relationship between image-quality distortion and the code amount. Concerning the details of the RD-Optimization scheme, the description has been given in the following document:

Document 3; G. Sullivan and T. Wiegand: "Rate-Distortion Optimization for Video Compression", IEEE Signal Processing Magazine, Vol. 15, No. 6, pp. 74 to 90, 1998.

When the processing in the loop 2 has been terminated, subsequently, the prediction differences generated in the selected optimum coding mode are subjected to the frequency transformation (809) and the quantization processing (810), then being further subjected to the variable length coding thereby to generate the encoded stream (811). Meanwhile, the inverse quantization processing (812) and the inverse frequency transformation (813) are applied to the pre-quantized frequency transformation coefficients, thereby decoding the prediction differences. Furthermore, the decoded image is generated, then being stored into the reference-image memory (814). When the foregoing processings have been terminated with respect to all the blocks, the processing in the loop 1 is terminated. Accordingly, the encoding by the amount of the 1-frame image is terminated (815).

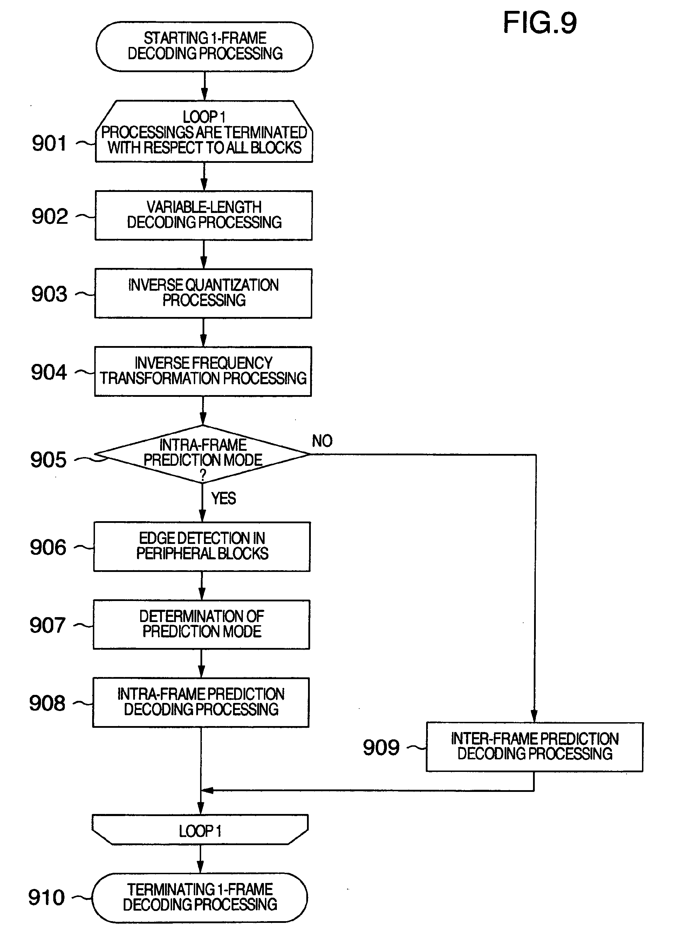

Fig. 9 is a flowchart for illustrating 1-frame decoding processing steps in the embodiment of the moving-picture decoding device illustrated in Fig. 2. First, with respect to all the blocks existing within 1 frame, the processing in a loop 1, where each processing from a processing (902) to a processing (908 or 909) described hereinafter is repeated, is performed. Namely, the inputted stream is subjected to the variable-length decoding processing (902), then being further subjected to the inverse quantization processing (903) and the inverse frequency transformation (904) thereby to decode the prediction differences. Subsequently, the intra-frame prediction decoding processing (908) or the inter-frame prediction decoding processing (909) is performed depending on by which prediction method the target block has been prediction-encoded. In this way, the decoded image is acquired, then being stored into the reference-image memory. Here, when performing the intra-frame prediction decoding processing (908), the edge included in the pre-decoded blocks positioned on the periphery of the target block is detected using the Sobel filter or the like (906). Moreover, the prediction direction in the target block is identified by taking advantage of, e.g., the function F illustrated in (704) (907). When the foregoing processings have been terminated with respect to all the blocks within the frame, the decoding by the amount of the 1-frame image is terminated as the processing in the loop 1 (910).

In the above-described embodiments, the DCT has been mentioned as an example of the frequency transformation. Whatever transformation method, however, is all right as long as it is an orthogonal transformation used for eliminating the inter-pixel correlation, such as DST (: Discrete Sine Transformation), WT (: Wavelet Transformation), DFT (: Discrete Fourier Transformation), or KLT (: Karhunen-Loeve Transformation). Also, it is allowable to perform the encoding with respect to the prediction differences itself without applying the frequency transformation thereto in particular. Moreover, it is also all right not to perform the variable length coding in particular. In the embodiments, the description has been given regarding the case where the prediction of the luminance component is performed in the 4-pixel x 4-pixel-size block unit in particular. It is also allowable, however, to apply the present invention to a whatever-pixel-size block such as, e.g., 8-pixel x 8-pixel-size block or 16-pixel x 16-pixel-size block, and to apply the present invention to the prediction of a component other than the luminance component such as, e.g., the color-difference component. Also, although, in the embodiments, the prediction along the eight directions stipulated in H.264/AVC has been performed, it is all right to increase or decrease the number of the directions.

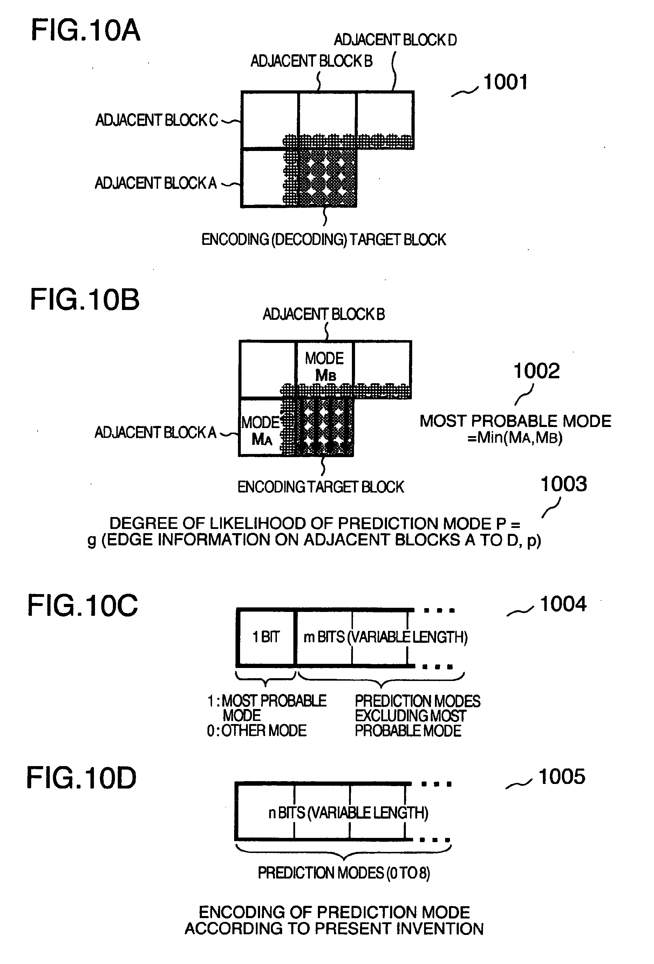

Figs. 10A to 10D are conceptual diagrams for illustrating another embodiment of the encoding processing for the prediction mode according to the present invention. In the present embodiment as well, as is the case with the embodiment illustrated in Fig. 6, the prediction direction in the target block is estimated by taking advantage of the decoded images in the pre-encoded adjacent blocks A, B, C, and D which are adjacent to the left side, upper-left side, upper side, and upper-right side of the target block (1001). Also, as is the case with H.264/AVC, the prediction mode whose number is smaller of the prediction modes of the adjacent blocks which are adjacent to the left side and the upper side of the target block respectively is employed as the most probable mode (1002). Here, in the present embodiment, a function g for inputting the edge information on the adjacent blocks A to D and the prediction-mode number p, and calculating the degree of likelihood of the prediction mode p (1003) is taken advantage of, then dynamically creating a variable-length code table based on the degree of likelihood of each prediction mode p. Namely, a shorter code is allocated to the prediction mode whose degree of likelihood is higher, and a longer code is allocated to the prediction mode whose degree of likelihood is lower, thereby making the average code length shorter. Although whatever method is all right as the method for creating the variable-length code table, taking advantage of, e.g., Huffman encoding is quite effective. In (1004), the following embodiment is explained: Whether or not the prediction mode in the target block is the same as the most probable mode is represented with 1 bit. Then, if the prediction mode is different from the most probable mode, a variable-length code table with respect to the eight-type prediction modes excluding the most probable mode is created, then performing the encoding based on this variable-length code table. Also, in (1005), the following embodiment is explained: Not depending on whether or not the prediction mode in the target block is the same as the most probable mode, a variable-length code table with respect to all of the nine-type prediction modes is created, then performing the encoding based on this variable-length code table.

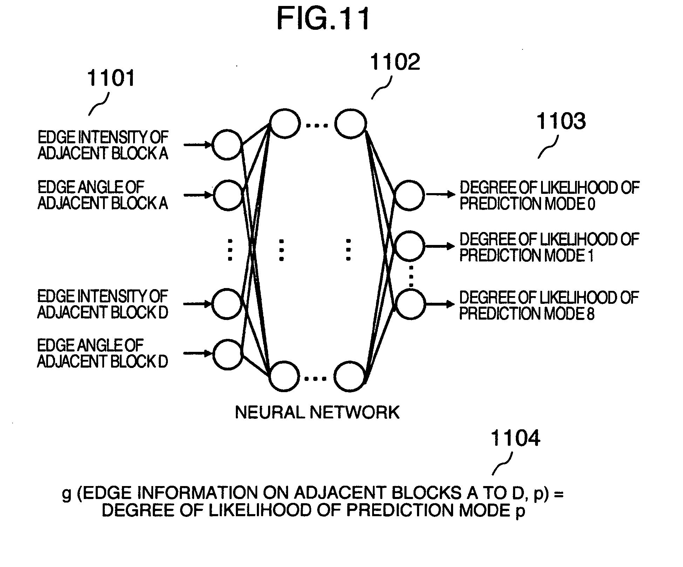

Whatever method is all right as the method for implementing the function g for outputting the degree of likelihood of the prediction mode p in the target block. For example, as is the case with the embodiment illustrated in Fig. 6, taking advantage of the mechanical learning function of the neural network permits successful implementation of this function g. Fig. 11 illustrates an example of the case where the function g is implemented taking advantage of the neural network. Here as well, as is the case with the neural network illustrated in Fig. 7, the learning in the neural network (1102) is performed in advance so that, when the edge intensities and edge angles of the adjacent blocks A to D are normalized and inputted into the neural network (1002), the degree of likelihood of the prediction mode n (n = 0, 1, ..., 8) will be calculated and outputted (1103). At this time, a function which will output the degree of likelihood of the prediction mode p (p = 0, 1, ..., 8) is set as the above-described function g (1104). This setting allows implementation of the encoding and decoding processings based on the method illustrated in Figs. 10A to 10D.

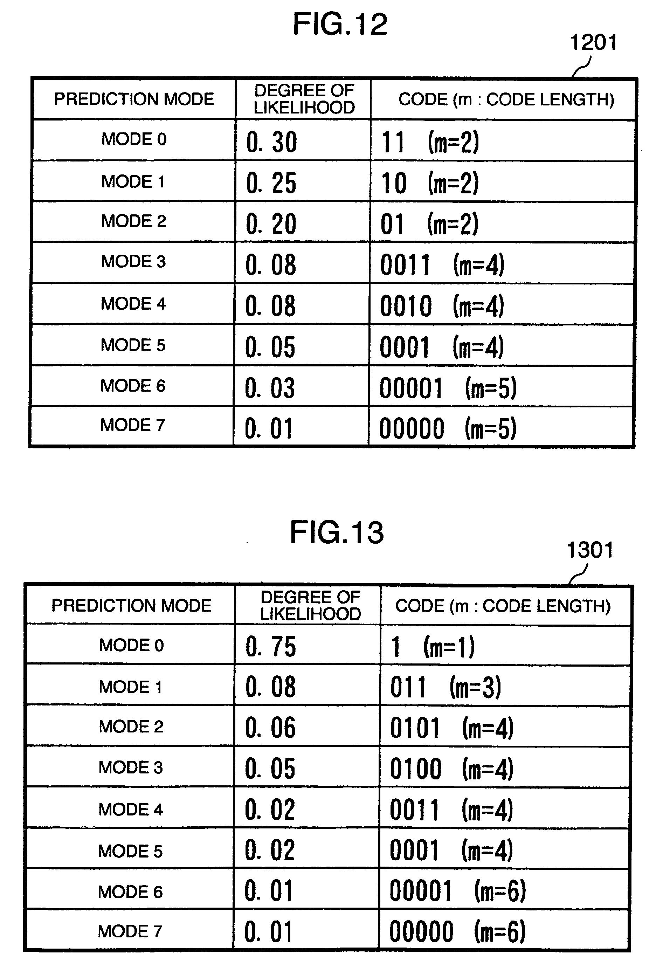

Fig. 12 and Fig. 13 illustrate examples of the codes (i.e., the variable-length code tables) which will be allocated to each prediction mode when each prediction mode is encoded based on the method indicted in (1005) and taking advantage of the Huffman encoding. Here, a case where the most probable mode is the mode 8 is illustrated. In H.264/AVC, if the prediction mode in the target block is different from the most probable mode, the 4-bit code is necessary for encoding each prediction mode. In contrast thereto, in the example illustrated in Fig. 12, the code amount can be reduced down to 3 bits at the minimum (i.e., 1 bit for representing whether each prediction mode is the same as or different from the most probable mode + 2 bit (i.e., code length m = 2) for representing the number of each prediction mode. Furthermore, if the degree of likelihood of each prediction mode is biased like the example illustrated in Fig. 13, the code amount can be reduced down to 2 bits at the minimum (i.e., 1 bit for representing whether each prediction mode is the same as or different from the most probable mode + 1 bit (i.e., code length m = 1) for representing the number of each prediction mode. In this way, it is preferable to dynamically create the variable-length code table based on the estimated degree of likelihood of each prediction mode. Otherwise, it is all right to create a plurality of variable-length code tables in advance, and to properly use these variable-length code tables depending on the occasions based on the estimated degrees of likelihood.

In the present embodiment, the description has been given concerning the case where the moving pictures are encoded. The present invention, however, is also effective in encoding still-frame pictures. Namely, the portion which remains after excluding the motion search unit (104) and the inter-frame prediction unit (107) from the block diagram illustrated in Fig. 1 is equivalent to the block diagram of an encoding device which is designed specifically for the still-frame pictures. Also, the present invention can also be implemented as an image processing (encoding/decoding) system acquired by combining the image encoding device with the image decoding device, or an image processing (encoding/decoding) method acquired by combining the image encoding method with the image decoding method.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. An image encoding device, comprising:
an intra-frame prediction encoding unit (106) which calculates prediction differences by performing an intra-frame prediction in a block unit;
a prediction-direction estimation unit (105) which estimates a prediction direction in performing said intra-frame prediction;
a frequency transformation unit (110) and a quantization processing unit (111) which perform an encoding with respect to said prediction differences; and
a variable length coding unit (112) which performs a variable length coding, wherein
said prediction-direction estimation unit (105) estimates said prediction direction from decoded images in blocks which are adjacent to a block that becomes an encoding target.

2. An image encoding method which encodes prediction differences by performing an intra-frame prediction in a block unit,
said image encoding method, comprising a step of:
performing said intra-frame prediction along a prediction direction estimated by taking advantage of decoded images in blocks which are adjacent to an encoding target block.

3. The image encoding method according to Claim 2, further comprising a step of:
not encoding said prediction direction estimated in performing said intra-frame prediction.

4. The image encoding method according to Claim 2, further comprising the steps of:
dynamically creating a variable-length code table based on said prediction direction estimated; and
performing a variable length coding of said prediction direction based on said variable-length code table created.

5. The image encoding method according to Claim 2, further comprising the steps of:
selecting one prediction direction from among a plurality of variable-length code tables based on said prediction direction estimated, said plurality of variable-length code tables being created in advance; and
performing a variable length coding of said prediction direction selected.

6. The image encoding method according to Claim 2, further comprising a step of:
estimating said prediction direction based on image parameters such as edge information on said decoded images in said blocks which are adjacent to said encoding target block.

7. The image encoding method according to Claim 6, further comprising the steps of:
outputting degrees of likelihood of prediction modes by using a neural network (702) which receives an input of said image parameters, and which employs a summation of products as an input into a unit deployed in a higher-order hierarchy of said neural network (702), said products being products of values outputted by a group of units deployed in a lower-order hierarchy of said neural network (702) and weights of connections between said units; and
estimating, as said prediction direction, said prediction mode whose degree of likelihood becomes a maximum value.

8. An image decoding device, comprising:
a variable-length decoding unit (202) which performs an inverse processing step to a variable length coding;
an inverse quantization processing unit (203) and an inverse frequency transformation unit (204) which decode prediction differences; and
an intra-frame prediction decoding unit (206) which acquires a decoded image by performing an intra-frame prediction, wherein
said image decoding device further comprises:
a prediction-direction estimation unit (205) which estimates a prediction direction in performing said intra-frame prediction by taking advantage of decoded images in blocks which are adjacent to a decoding target block.

9. An image decoding method which decodes prediction differences by performing an intra-frame prediction in a block unit,
said image decoding method, comprising a step of:
performing said intra-frame prediction along a prediction direction estimated by taking advantage of decoded images in blocks which are adjacent to a decoding target block.

10. The image decoding method according to Claim 9, further comprising a step of:
not decoding said prediction direction estimated in performing said intra-frame prediction.

11. The image decoding method according to Claim 9, further comprising the steps of:
dynamically creating a variable-length code table based on said prediction direction estimated; and
performing a variable-length decoding of said prediction direction based on said variable-length code table created.

12. The image decoding method according to Claim 9, further comprising the steps of:
selecting one prediction direction from among a plurality of variable-length code tables based on said prediction direction estimated, said plurality of variable-length code tables being created in advance; and
performing a variable-length decoding of said prediction direction selected.

13. The image decoding method according to Claim 9, further comprising a step of:
estimating said prediction direction based on image parameters such as edge information on said decoded images in said blocks which are adjacent to said decoding target block.

14. The image decoding method according to Claim 13, further comprising the steps of:
outputting degrees of likelihood of prediction modes by using a neural network (702) which receives an input of said image parameters, and which employs a summation of products as an input into a unit deployed in a higher-order hierarchy of said neural network (702), said products being products of values outputted by a group of units deployed in a lower-order hierarchy of said neural network (702) and weights of connections between said units; and
estimating, as said prediction direction, said prediction mode whose degree of likelihood becomes a maximum value.
